# EUROPÄISCHE PATENTANMELDUNG

(11) **EP 1 870 333 A2**
(43) Veröffentlichungstag der Anmeldung: **26.12.2007**
(21) Anmeldenummer: 07011006.9
(22) Anmeldetag: 05.06.2007
(51) Int. Cl.: B64D 11/06, B60N 2/02

(54) **Einstellsystem für Fahrzeugsitze oder Gruppen von Fahrzeugsitzen**

(30) Priorität: 20.06.2006 DE 102006029207
(71) Anmelder: Bühler Motor GmbH, 90459 Nürnberg (DE)
(72) Erfinder: Schieweck, Arno, 90571 Schwaig (DE); Trölenberg, Wolfgang, Dr., 41352 Korschenbroich (DE); Abt, Hans-Dieter, 80469 München (DE)

(57) **Zusammenfassung**

Die Erfindung betrifft ein Einstellsystem für Fahrzeugsitze oder Gruppen von Fahrzeugsitzen, insbesondere Flugzeugsitze, bestehend aus ein oder mehreren Steuereinheiten und aus ein oder mehreren Verstelleinheiten. Aufgabe der Erfindung ist es ein Einstellsystem darzustellen, das eine Trennung zwischen Grundfunktionen und anwendungsspezifischen Funktionen erlaubt und die Anpassung der anwendungsspezifischen Funktionen erleichtert. Diese Aufgabe wird erfindungsgemäß dadurch gelöst, dass die Bewegungsabläufe und Bewegungen der jeweils einzelnen Sitzkomponenten und dieser Sitzkomponenten zueinander und die Bewegungen dieser Komponenten oder Sitze innerhalb einer Umgebung oder Sitzgruppe durch ein Bewegungsmodell vollständig beschrieben werden.

## Beschreibung

Die Erfindung betrifft ein Einstellsystem für Fahrzeugsitze oder Gruppen von Fahrzeugsitzen, insbesondere Flugzeugsitze, bestehend aus ein oder mehreren Steuereinheiten und aus ein oder mehreren Verstelleinheiten.

Fahrzeugsitze, insbesondere Flugzeugsitze für die Business und First-Class beinhalten heute vielfältige Einstellmöglichkeiten. Die Einstellung wird dabei meist von einer programmierten Steuereinheit vorgenommen. Diese Steuereinheit nimmt den Verstellwunsch des Benutzers entgegen und führt die entsprechende Verstellung einer oder mehrer Sitzkomponenten einzeln oder auch zusammenhängend, je nach Aufbau und Anforderung durch die gegebene Sitzstruktur aus.

In der Entwicklungsphase eines solchen Sitzes ist eine eng verzahnte Zusammenarbeit zwischen dem Konstrukteur des Sitzes und dem Softwareentwickler der Steuerung notwendig, um die geometrischen Daten und Verstellwege der jeweiligen Sitzkomponente und den Bewegungsablauf der Komponenten zueinander in ein entsprechendes Steuerungsprogramm umzusetzen. Für jede Sitzkomponente und die Bewegung der Komponenten zueinander müssen hierbei definierende Daten festgelegt werden.
Sind diese Daten ermittelt, werden diese in ein Ablaufprogramm für die Steuerung umgesetzt. Dies geschieht durch Beschreibung des Ablaufes in einer heute üblichen Programmiersprache, z.B. C durch einen Programmierer, der diese Abläufe in die generelle Steuerungssoftware einbindet. Hierdurch sind die Basisfunktionen und die Bewegungsfunktionen zu einer untrennbaren Gesamtsoftware verschmolzen. Modifikationen an den Einzelteilen können meist nur durch den Steuerungshersteller vorgenommen werden und machen eine Neucompilation und Validierung, im Extremfall sogar eine Neuqualifikation der gesamten Software notwendig.

Da die Steuerungserstellung und Programmierung in der Regel nicht zu den Kernkompetenzen eines Sitzherstellers gehört, wird die Steuerung und die Softwareanpassung für den jeweiligen Sitz durch den Sitzhersteller bei einem Steuerungshersteller oder einem Dienstleister beauftragt.

Die Verifizierung des Verstellablaufs geschieht am tatsächlichen Sitz. Da zu beachtende Eigenheiten, z.B. Polster und Bezugsstoffe des Sitzes, sowie durch die Forderung nach einem für den Sitzbenutzer angenehmen Verstellen, größtenteils zum Zeitpunkt der Programmerstellung noch nicht vollständig vorliegen, ist es meist notwendig, vor dem Start der Serienproduktion noch Anpassungen vorzunehmen.

Da der Sitzhersteller die Steuerung und die Software meist durch einen Dienstleister oder Hersteller der Steuerung erstellen lässt, sind ungeplante Änderungen meist schwer umzusetzen, da die Ressourcen des Dienstleisters zu dem Zeitpunkt des Änderungswunsches meist durch andere Projekte gebunden sind.

Ein Weg aus diesem Engpass wäre für den Sitzhersteller die eigenständige Anpassung der Software mittels eigener Mitarbeiter. Dieser Weg ist aber kaum gangbar, da der Steuerungshersteller hierfür den gesamten Programmcode der Steuerung, somit sein geistiges Eigentum offen legen müsste. Weiter sind bei dieser Vorgehensweise Gewährleistungsprobleme zu erwarten, da durch Änderungen des Programmcodes durch den Sitzhersteller auch Stellen beeinflusst sein könnten, die nicht die Bewegungssteuerung betreffen und deren Auswirkungen nicht durch den Sitzhersteller einschätzbar sind.

Aufgabe der Erfindung ist es daher ein Einstellsystem darzustellen, das eine Trennung zwischen Grundfunktionen und anwendungsspezifischen Funktionen erlaubt und die Anpassung der anwendungsspezifischen Funktionen erleichtert.

Diese Aufgabe wird erfindungsgemäß dadurch gelöst, dass die Bewegungsabläufe und Bewegungen der jeweils einzelnen Sitzkomponenten und dieser Sitzkomponenten zueinander und die Bewegungen dieser Komponenten oder Sitze innerhalb einer Umgebung oder Sitzgruppe durch ein Bewegungsmodell vollständig beschrieben werden. Dieses Bewegungsmodell ermöglicht eine Trennung von Steuerungsbasisfunktionen, wie z.B. der Kommunikation mit einem Handbediengerät, dem Inflight-Entertainment-System (IFE-System) und der direkten Ansteuerung von Sitzverstellelementen von der Bewegungssteuerung und -koordination des Sitzes. Durch die Verwendung des Bewegungsmodells werden die oben beschriebenen Nachteile des Standes der Technik vermieden.

Weiterbildungen der Erfindung werden in den Unteransprüchen dargestellt. Eine komfortable Möglichkeit für den Entwickler zur Konfiguration des Bewegungsmodells ist es, wenn dieses an einem Personal Computer (PC) oder einer CAD-Station eingegeben und angepasst werden kann.

Es ist vorgesehen, dass Grenzparameter für das Bewegungsmodel automatisch auf Basis definierter Umgebungsbeschreibungen generiert werden. Dadurch lässt sich die Anpassung an Geometrieänderungen eines Sitzes oder der Zuordnung von Sitzen zueinander einfacher durchführen und der Änderungsaufwand minimieren.

Eine besonders bevorzugte Weiterbildung der Erfindung ist die Möglichkeit das Bewegungsmodell am PC zu simulieren. Die Erfindung beschreibt ein System, das die Beschreibung und Umsetzung der Bewegungen der Sitzkomponenten von den grundlegenden Programmabläufen der Steuerung trennt und dem Sitzhersteller erlaubt, die geometrischen Daten und Bewegungen der Komponenten und des Sitzes über einfach zu bedienende Hilfsmittel einzugeben, zu modifizieren, zu simulieren, zu testen und für den Betrieb in die Steuerung zu übertragen. Hierdurch entfallen die hohen Aufwendungen für Versuchsdurchführungen am Modell oder am Einsatzort.

Die Möglichkeit, die Ergebnisse einer Modellentwicklung oder der Anpassung bei der Simulation vom PC in eine Steuerung zu übertragen, erlaubt es das gefundene Modell schneller im Einsatz zu testen.

Es ist vorstellbar, dass das Bewegungsmodel in einer PC oder CAD-Stations-Software erstellt werden kann, oder dass es in einem Software-Modul erstellt wird, das in eine PC- oder CAD-Stationsumgebung nachladbar ist (=Plug In).

Die Steuerung besteht aus einer Hardware und einer Software. Sie umfasst eine Basissoftware, die als Betriebssystem interpretierbar ist und je nach Kundenanwendung differieren kann.

Es ist vorgesehen, dass die Steuerung die primären Steuerungsfunktionen bereitstellt und ein Verarbeitungsteil umfasst, wobei das Verarbeitungsteil aus einer Soft- und einer Hardware besteht. Das Verarbeitungsteil arbeitet mit dem jeweiligen Bewegungsmodell und erlaubt dessen flexible Einbettung in die Steuerung.

Wirtschaftlich ist es von großem Nutzen die Steuerung modular aufzubauen, so dass die Steuerung flexibel an unterschiedliche Konfigurationen angepasst werden kann.

Das Einstellsystem soll die Handhabung des Bewegungsmodells von zumindest einem Sitz erlauben. In weiterer Ausgestaltung dieses Erfindungsgedankens ist vorgesehen, dass es die Handhabung des Bewegungsmodells von mindestens einem Sitz in Abhängigkeit der Umgebungsbeschreibung erlaubt. Mit "Handhabung" ist der Betrieb von Komponenten des Sitzes, oder des Sitzes in seiner Umgebung gemeint.

Da die Umgebung in den meisten Anwendungsfällen nicht starr ist, sondern selbst aus beweglichen Elementen besteht, wie Nachbarsitzen oder Kabinenabtrennungen, ist es wichtig, dass das Einstellsystem auch für die Variierung von Umgebungsbeschreibungen während des Betriebs ausgelegt ist.

Um Kollisionen zu vermeiden ist eine Kontrolle auf Verletzung von Grenzparametern und Umgebungsbeschreibungen notwendig. Hierbei können Sensoren eingesetzt werden, die bei Annäherung an ein Hindernis oder an vordefinierte Grenzen entsprechende Rückmeldungen generieren. Soweit es sich um definierte Grenzen handelt, sind Potentiometer als geeignete Bewegungssensoren bekannt. Hindernisse können im einfachsten Fall durch eine di/dt-Auswertung nach einer Berührung oder per Ultraschall-Sensor schon vor einer möglichen Kollision erkannt werden.

Im Falle von Verletzungen von Grenzparametern und Umgebungsbeschreibungen soll es dem System erlaubt sein, definierbare Aktionen durchzuführen. Solche Aktionen können sein: Anhalten, Zurückfahren, Ausweichen, Geschwindigkeitsanpassungen oder auch eine Warnsignalausgabe.

Eine besonders bevorzugte Weiterentwicklung des Einstellsystems umfasst eine dreidimensionale Bewegung des Sitzes oder der Sitze. Die dreidimensionale Bewertung des zulässigen Verfahrraums erlaubt eine ökonomische, platzsparende Anordnung von Sitzsystemen und Absicherung/Vermeidung von möglichen Kollisionen. Aufgrund des Kabinenbezugs des Koordinatensystems können die Kabinenbegrenzungen mit erfasst werden.

Es ist dabei vorgesehen dass das dreidimensionale Bewegungsmodell die Bewegung der Sitzkomponenten und des Sitzes oder von Sitzgruppen in einem dreidimensionalen Koordinatensystem abbildet. Als besonders geeignet erweist sich dabei die Verwendung eines Kugelkoordinatensystems.

Es hat sich als sinnvoll herausgestellt ein Kugelkoordinatensystem für die Bestimmung der Position der Sitzkomponenten oder des Sitzes in Bezug auf die Kabine oder in Bezug auf andere Hindernisse zu verwenden. Das Kugelkoordinatensystem eignet sich besonders für Sitze, die um eine zum Kabinenboden rechtwinklige Achse dreh- oder schwenkbar sind. Für bestimmte Bewegungen oder Bewegungsabläufe kann die zusätzliche Verwendung eines rechtwinkligen Koordinatensystems zweckmäßig sein, deshalb ist es vorgesehen, dass ergänzend zum Kugelkoordinatensystem ein rechtwinkliges Koordinatensystem einsetzbar ist.

Durch Kontrolle der Bewegung des Sitzes und dessen Komponenten innerhalb einer räumlichen Begrenzung, wobei die räumliche Begrenzung durch eine dreidimensionale ebene oder gekrümmte Hüllfläche gekennzeichnet ist, kann für jede Bewegung des Sitzes in alle Raumrichtungen sichergestellt werden, dass eine Kollision vermieden wird.

Damit auch individuell eingestellte Nachbarsitze oder Kabinenbegrenzungen bei der Kollisionsvermeidung berücksichtigt werden können, lässt sich auch die räumliche Begrenzung, also die Hüllfläche innerhalb derer sich der Sitz frei bewegen kann in ihrer Lage und Form ändern.

Um die Umgebungsänderungen berücksichtigen zu können ist vorgesehen, dass ein Informationsaustausch zwischen den Sitzen bzw. deren Steuerungssystemen zum Abgleich der veränderten Hüllfläche stattfindet. Dieser Informationsaustausch kann über ein Bussystem erfolgen, an dem alle Sitze einer Sitzgruppe angeschlossen sind. Bei einander benachbarten Sitzen kann derselbe Controler die Sensorsignale auswerten und die Steuerung vornehmen. Bei der Kommunikation mit dem Vorder- oder dem Rücksitz können z.B. das Bordethernet, CAN-Bus, Bluetooth oder sonstige Kommunikationsprotokolle verwendet werden. Es ist sinnvoll, dass auch andere bewegliche Teile mit einer Kommunikationsschnittstelle ausgestattet sind, um auch die Daten ihrer aktuellen Lage und Anordnung in die Bewegungssteuerung mit einbeziehen zu können.

Um eine möglichst ökonomische platzsparende Anordnung der Sitze zu erreichen, ist es vorgesehen, dass die Bewegung der Sitze automatisiert verkoppelt sind.

Das beschriebene Sitzsteuerungssystem soll aus einer ControlUnit, Aktuatoren und geeigneten Weg- und Winkelsensoren bestehen. Geeignet sind z.B. Dreh- oder Linearpotentiometer.

Eine besonders gute Ansteuerbarkeit und eine hohe Genauigkeit der Positionierung ist mit elektrisch ansteuerbaren und betreibbaren Betätigungseinrichtungen gegeben.

Die Erfindung betrifft ein System, das die Beschreibung und Umsetzung der Bewegungen der Sitzkomponenten von den grundlegenden Programmabläufen der Steuerung trennt und dem Sitzhersteller erlaubt, die geometrischen Daten und Bewegungen der Komponenten und des Sitzes über einfach zu bedienende Hilfsmittel einzugeben, zu modifizieren, zu simulieren, zu testen und für den Betrieb in die Steuerung zu übertragen. Das Bewegungsmodell beschreibt die eine Bewegung charakterisierenden Eigenschaften von Komponenten eines Sitzes, des gesamten Sitzes, sowie die Eigenschaften des Sitzes in seiner Umgebung. Dies sind zum Beispiel der Ort und Weg, die Maximal- und Minimalposition, die Verstellgeschwindigkeit, Start- und Stopp-Rampen und -Bedingungen, sowie diverse Abbruchbedingungen für die Bewegung, sowie eine Beschreibung der Abhängigkeiten von anderen Objekten.

Dieses Bewegungsmodell ermöglicht eine Trennung von Steuerungsbasisfunktionen, wie z.B. der Kommunikation mit einem Handbediengerät, einem Inflight-Entertainment-System (IFE-System) und der direkten Ansteuerung von Sitzverstellelementen von der Bewegungssteuerung und -koordination des Sitzes. Weiter ist es möglich ein Software-Tool zu erstellen, das beispielsweise auf einem PC oder einer CAD-Station lauft und dem Sitzhersteller erlaubt, den Sitz und das Bewegungsmodell des jeweiligen Sitzes zu beschreiben. Es ist denkbar, dass die Konstruktionsdaten hierfür direkt aus dem CAD-System des Sitzherstellers abgeleitet oder verarbeitet werden können.

Die Vorteile des oben beschriebenen Systems und Verfahrens sind offen sichtlich. Die Steuerung enthält eine Software (Betriebssystem), die vom Steuerungshersteller für die jeweilige Sitzanwendung verantwortet und bereitgestellt wird. Dieses Betriebssystem erlaubt das Übernehmen und Umsetzen von Daten und Abläufen der Sitzverstellung aus einem Softwaretool zur Modellierung der Bewegungsabläufe. Damit wird der Steuerungshersteller zur Erstellung der eigentlichen Bewegungssoftware überflüssig und für den Sitzhersteller erleichtert sich der Prozess der Implementierung und Anpassung der Bewegungssoftware signifikant. Es ist nun nicht mehr notwendig, den Steuerungshersteller für die Implementierung und Anpassung der Steuerungssoftware heranzuziehen, was zu einer erheblichen Kosten- und Zeitersparnis für den Sitzhersteller führt und ihm die Flexibilität gibt, bis kurz vor Serieneinsatz Modifikationen an der Bewegungssteuerung in eigener Regie und Verantwortung vorzunehmen. Darüber hinaus muss der Sitzhersteller kein Fachpersonal mit Programmierkenntnissen vorhalten, um Definition und Modifikationen am Bewegungsmodel auszuführen. Dies kann vom Konstrukteur oder Entwicklungsingenieur mittels Softwarehilfsmittel vorgenommen werden.

Die Vorteile für den Steuerungshersteller sind ebenfalls klar erkennbar. Zum einen kann mit definiertem Entwicklungsaufwand das Betriebssystem für die jeweilige Anwendung erstellt und validiert werden. Zum anderen entfällt die Bereithaltung von Ressourcen zur Abdeckung von Bedarfsspitzen.

Sogar die Schulung für die Anwendung, sowie Wartung und sonstige Dienstleistungen für das oben beschriebenen Systems können von einem Dritten, z.B. Ingenieurdienstleister erledigt werden, um beim Steuerungshersteller nur die notwendigsten Ressourcen vorzuhalten. Dies führt zu hoher betrieblicher Effizienz.

Als weiterer Vorteil ist die vereinfachte Qualifikation zu nennen. Für das Basissystem wird vom Steuerungshersteller eine allgemeine Qualifikation durchgeführt und eine Zulassung erreicht. Diese Zulassung ist getrennt von der, durch den Sitzhersteller mit der endgültigen Anwendung durchzuführenden Sitzqualifikation, die dann nur noch den Bewegungsteil, und nicht mehr alle Steuerungsfunktionen und -Eigenschaften betrifft. So kann die Steuerung und das dazugehörige Engineeringpaket günstig und unter den bisherigen Kosten für solche Systeme, quasi ab Lager angeboten werden. Die Qualifikationsaufwendungen beim Sitzherstellers verringern sich ebenfalls drastisch, da nicht Bewegungsrelevante Funktionen der Steuerung durch die Steuerungsmusterzulassung (Luftfahrtzulassung des Basissystems, ohne das für die jeweilige Anwendung spezifische Bewegungsmodell) des Steuerungsherstellers entfallen.

Zusammenfassend sorgt das obigen System und Verfahren für signifikante Kosteneinsparungen bei Sitz und Steuerungshersteller, erlaubt schnellste Entwicklungs- und Modifikationszeiten beim Sitzhersteller und ermöglicht eine schnellere Qualifikation durch die Musterzulassung des Systems durch den Steuerungshersteller.

Anwendungsbeispiele der Erfindung werden nachstehend anhand der Zeichnung näher erläutert. Es zeigen:

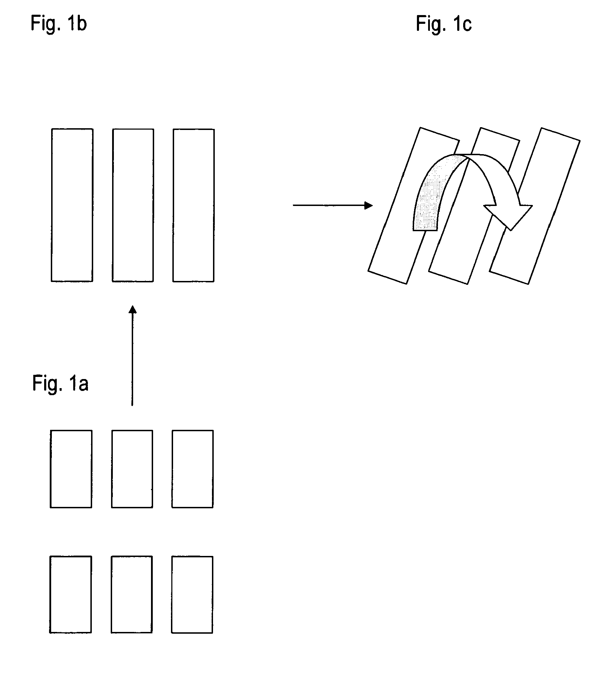

Fig.1a zwei Sitzreihen in aufrechter Position,
Fig. 1 b eine Sitzreihe in Liegeposition,
Fig. 1 c eine Sitzreihe in verdrehter Stellung,
Fig. 2 eine Skizze eines Fahrzeugsitzes,
Fig. 3a zwei eng benachbarte Fahrzeugsitze,
Fig.3b zwei seitlich verstellte Fahrzeugsitze,
Fig. 3c zwei um ca. 45° gleichsinnig verdrehte Fahrzeugsitze,
Fig. 4a zeigt eine Sitzgruppe aus zwei Sitzreihen in einer Kabine,
Fig. 4b zeigt eine als Besprechungszimmer konfigurierte Kabine,
Fig. 5 zeigt einen Fahrzeugsitz in einem Kugelkoordinatensystem und
Fig. 6 einen Fahrzeugsitz mit angedeuteten begrenzenden Hüllflächen.

Fig. 1a zeigt zwei Sitzreihen mit jeweils drei in einer Reihe nebeneinander angeordneten Sitzen. Dabei sind die Sitze in der sog. TTL - Position dargestellt (TTL = Taxi, Take-Off and Landing), in der die Passagiere aufrecht sitzen.

Fig. 1 b, zeigt eine der Sitzreihen in der so genannten Full-Flat-Position, bei der eine Beinauflage hochgestellt ist und eine Rückenlehne abgesenkt ist.

Fig. 1 c zeigt eine Sitzreihe in verdrehter Stellung. Dabei wird eine platzsparende Stellung eingenommen, da sich der seitliche Abstand der Sitze untereinander verringert.

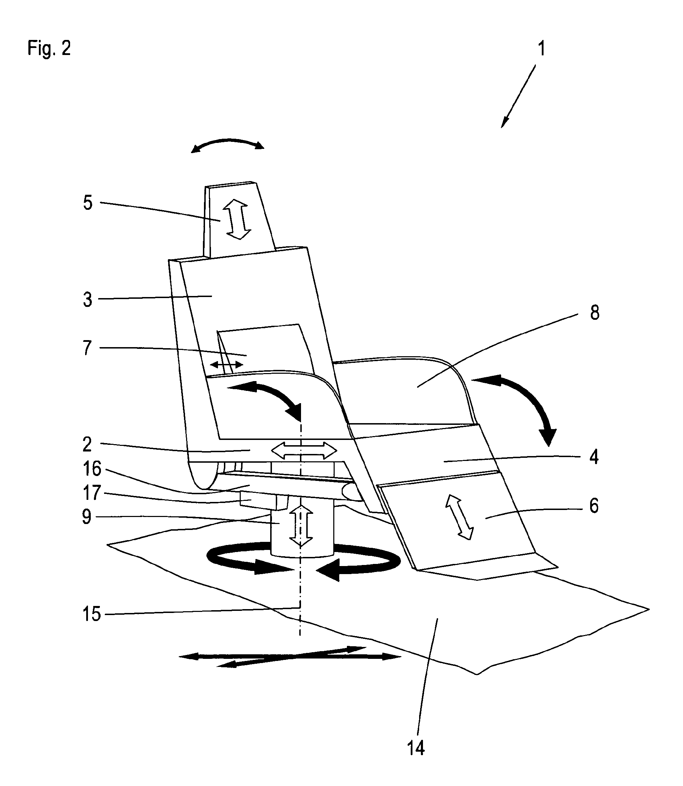

Fig. 2 zeigt eine Skizze eines Fahrzeugsitzes 1 mit einem Sitzteil 2, an dem eine Rückenlehne 3 und eine Beinauflage 4 schwenkbar angelenkt sind. An der Rückenlehne 3 ist eine Kopfstütze 5 höhenverstellbar geführt und in ihrer Neigung einstellbar angelenkt. Am Sitzteil 2 ist eine Fußstütze 6 längsbeweglich geführt. Das Sitzteil 2 ist längsbeweglich und verdrehbar oder zumindest verschwenkbar an einem Sitzrahmen 9 geführt und gelagert. Der Sitzrahmen 9 ist höhenverstellbar und in zumindest einer weiteren Richtung neigbar oder linear verstellbar (vor und zurück bzw. nach rechts und nach links). Der Fahrzeugsitz 1 ist um eine Drehachse 15 dreh- oder zumindest schwenkbar, wobei die Drehachse 15 rechtwinklig zu einem Kabinenboden 14 verläuft. Die Rückenlehne ist mit einer Lordosenstütze 7 ausgerüstet, die elektromechanisch oder pneumatisch betätigt sein kann. Bei einer pneumatischen Betätigung der Lordosenstütze 7 ist eine Luftpumpe im Fahrzeugsitz oder im Fahrzeug angeordnet und mit einem Luftpolster der Lordosenstütze 7 verbunden. Weiter umfasst der Fahrzeugsitz 1 Armlehnen 8, die optional elektromotorisch antreibbar sein können.

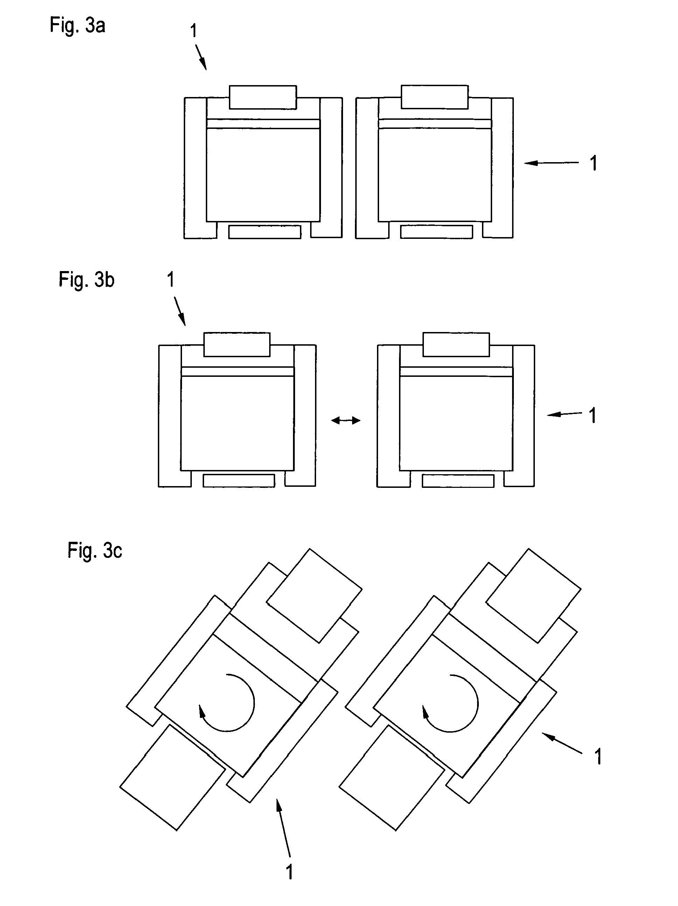

Fig. 3a zeigt zwei eng benachbarte Fahrzeugsitze 1, die bei Fig. 3b seitlich verstellt sind und bei Fig. 3c um ca. 45° gleichsinnig gedreht sind. Um die Sitze drehen zu können muss vorher ihr Abstand zueinander vergrößert werden.

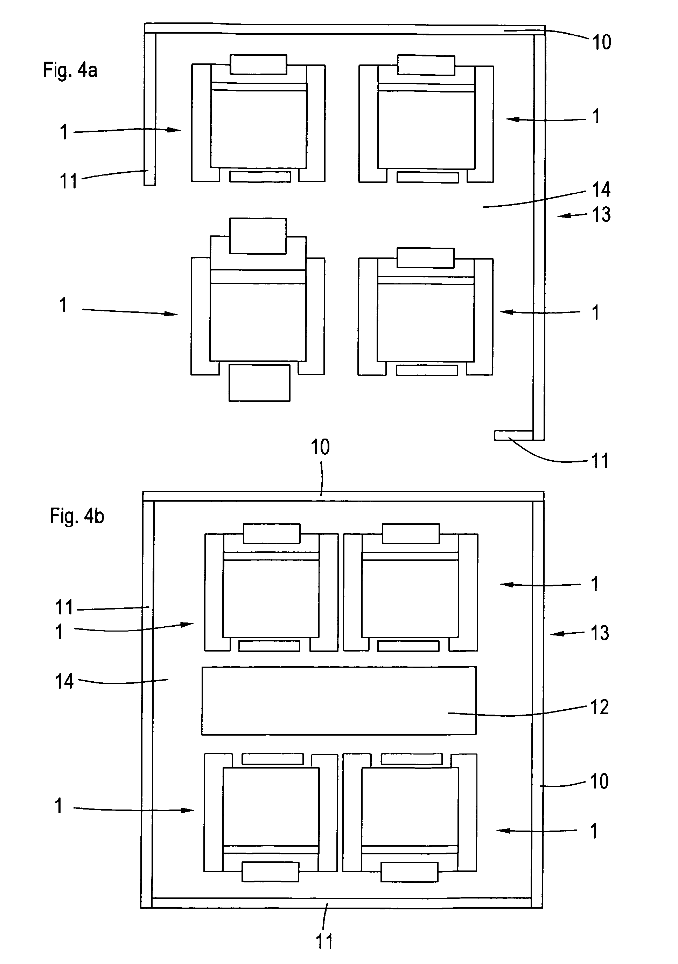

Fig. 4a zeigt eine Sitzgruppe aus zwei Sitzreihen mit je zwei Fahrzeugsitzen 1, die in gleicher Richtung ausgerichtet ist, innerhalb einer teilweise geöffneten Kabine 13, die aus festen Begrenzungswänden 10 und aus flexiblen Begrenzungswänden 11 besteht. Ein Sitz ist in eine bequemere Sitzposition eingestellt als die übrigen. Um diese Sitzanordnung in einen Besprechungsraum umzukonfigurieren sind bei Fig. 4b zwei Fahrzeugsitze 1 um 180° gedreht, damit sich die Passagiere gegenübersitzen können. Die Abstände der Fahrzeugsitze 1 untereinander sind teilweise verringert und teilweise vergrößert. Zwischen den beiden Sitzreihen ist ein Besprechungstisch 12 ausgefahren und flexible Begrenzungswände 11 wurden verstellt um einen geschlossenen Raum zu erhalten.

Das Verfahren zum Verstellen von Fahrzeugsitzen mit Hilfe eines dreidimensionalen Koordinatensystems erlaubt es die Fahrzeugsitze 1 kollisionsfrei automatisch oder halbautomatisch in eine andere Sitzkonfiguration (z.B. von Fig. 4a nach 4b) zu verstellen, wobei sowohl Begrenzungen, bestehend aus Vorder- oder Rücksitz als auch Kabinenbegrenzungen berücksichtigt werden.

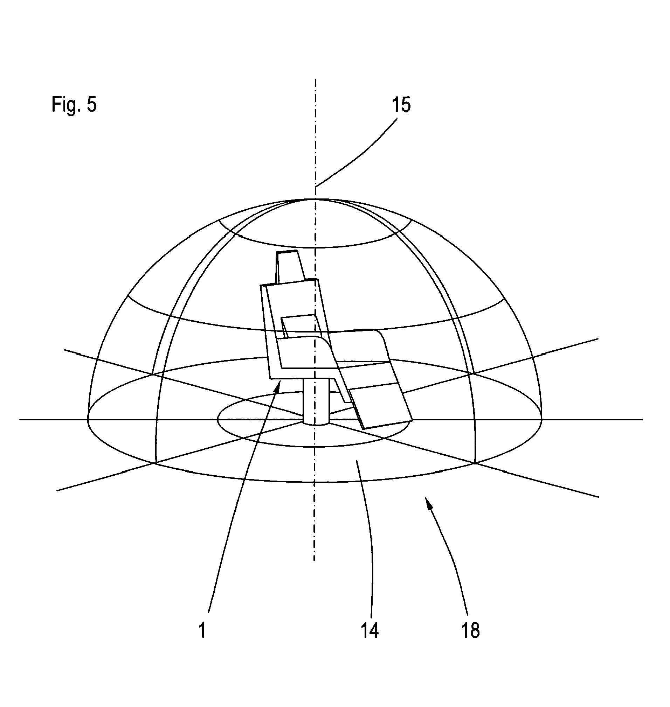

Fig. 5 zeigt einen Fahrzeugsitz 1 der um eine Drehachse 15 dreh- oder schwenkbar ist, wobei die Drehachse 15 rechtwinklig zu einem Kabinenboden 14 verläuft und der Fahrzeugsitz 1 in drei Raumrichtungen in einem Kugelkoordinatensystem einstellbar und verfahrbar ist.

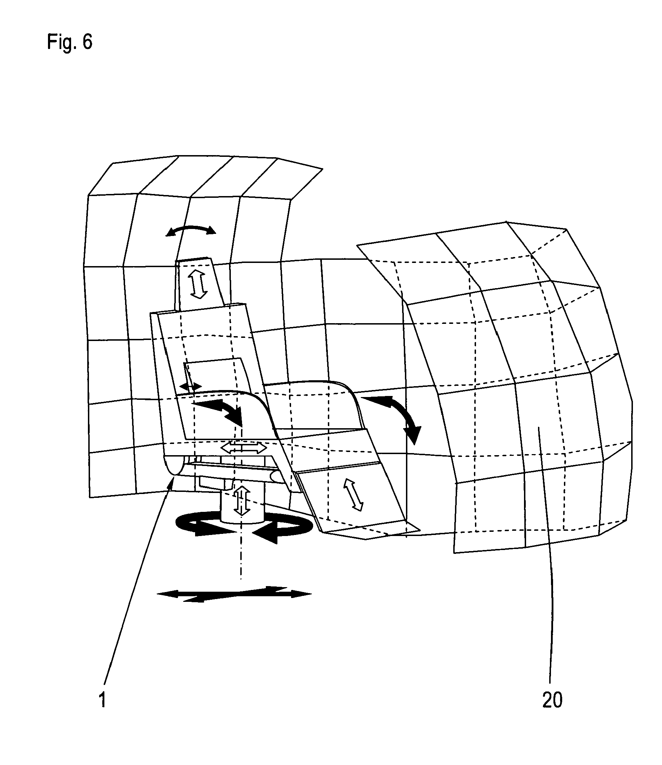

Fig. 6 zeigt einen Fahrzeugsitz 1 mit angedeuteten begrenzenden Hüllflächen 20. Die Hüllflächen werden bei dem Erfindungsgemäßen Verfahren als virtuelle Grenzen in die Berechnung der maximalen Verfahrwege einbezogen, so dass eine Kollision mit bekannten Hindernissen ausgeschlossen werden kann. Andere Hindernisse, die keine Stellungsrückmeldung beinhalten müssen über Sensoren, vorzugsweise über berührungslose Sensoren, z.B. Ultraschallsensoren, detektiert werden.

### Bezugszeichenliste

- 1: Fahrzeugsitz
- 2: Sitzteil
- 3: Rückenlehne
- 4: Beinauflage
- 5: Kopfstütze
- 6: Fußstütze
- 7: Lordosenstütze
- 8: Armlehne
- 9: Sitzrahmen
- 10: Feste Kabinenbegrenzung
- 11: Flexible Kabinenbegrenzung
- 12: Tisch
- 13: Fahrzeugkabine
- 14: Kabinenboden
- 15: Drehachse
- 16: Antriebseinrichtung
- 17: Elektronische Einrichtung
- 18: Koordinatensystem
- 19: Hüllfläche

## Patentansprüche

1. Einstellsystem für Fahrzeugsitze oder Gruppen von Fahrzeugsitzen, insbesondere Flugzeugsitze, bestehend aus ein oder mehreren Steuereinheiten und aus ein oder mehreren Verstelleinheiten, **dadurch gekennzeichnet, dass** die Bewegungsabläufe und Bewegungen der jeweils einzelnen Sitzkomponenten und dieser Sitzkomponenten zueinander und die Bewegungen dieser Komponenten oder Sitze innerhalb einer Umgebung oder Sitzgruppe durch ein Bewegungsmodell vollständig beschrieben werden.

2. Einstellsystem nach Anspruch 1, **dadurch gekennzeichnet, dass** das Bewegungsmodell vollständig an einem Personal Computer (PC) oder der CAD-Station eingegeben und konfiguriert werden kann.

3. Einstellsystem nach Anspruch 1 oder 2, **dadurch gekennzeichnet, dass** Grenzparameter für das Bewegungsmodel automatisch auf Basis definierter Umgebungsbeschreibungen generiert werden.

4. Einstellsystem nach Anspruch 1, 2 oder 3, **dadurch gekennzeichnet, dass** das Bewegungsmodell am PC simuliert werden kann.

5. Einstellsystem nach Anspruch 1, 2, 3 oder 4, **dadurch gekennzeichnet, dass** das Bewegungsmodell vom PC in eine Steuerung übertragen werden kann.

6. Einstellsystem nach zumindest einem der Ansprüche 2 bis 5, **dadurch gekennzeichnet, dass** das Bewegungsmodell mit Hilfe einer PC oder CAD-Stations-Software erstellt werden kann, oder mit Hilfe eines Software-Moduls erstellbar ist, das in eine PC- oder CAD-Stationsumgebung nachladbar ist (=Plug In).

7. Einstellsystem nach Anspruch 5 oder 6, **dadurch gekennzeichnet, dass** die Steuerung aus einer Hardware und einer Software besteht.

8. Einstellsystem nach Anspruch 5, 6 oder 7, **dadurch gekennzeichnet, dass** die Steuerung eine Basissoftware (=Betriebssystem) umfasst, die je nach Kundenanwendung differieren kann.

9. Einstellsystem nach Anspruch 5, 6, 7 oder 8, **dadurch gekennzeichnet, dass** die Steuerung die primären Steuerungsfunktionen bereitstellt und ein Verarbeitungsteil umfasst, wobei das Verarbeitungsteil aus einer Soft- und Hardware besteht.

10. Einstellsystem nach Anspruch 9, **dadurch gekennzeichnet, dass** das Verarbeitungsteil mit dem jeweiligen Bewegungsmodell arbeitet und dessen flexible Einbettung in die Steuerung erlaubt.

11. Einstellsystem nach Anspruch 5, 6, 7, 8, 9 oder 10, **dadurch gekennzeichnet, dass** die Steuerung, die modulare Konfiguration bezüglich der zu steuernden Komponenten ermöglicht.

12. Einstellsystem nach einem der Ansprüche 5 bis 11, **dadurch gekennzeichnet, dass** es die Handhabung (Betrieb von Komponenten des Sitzes, oder des Sitzes in seiner Umgebung) des Bewegungsmodells von mindestens einem Sitz erlaubt.

13. Einstellsystem nach zumindest einem der Ansprüche 5 bis 12 , **dadurch gekennzeichnet, dass** es die die Handhabung des Bewegungsmodels von mindestens einem Sitz in Abhängigkeit der Umgebungsbeschreibung erlaubt.

14. Einstellsystem nach Anspruch 13, **dadurch gekennzeichnet, dass** dessen Umgebungsbeschreibung während des Betriebs variieren kann.

15. Einstellsystem nach zumindest einem der Ansprüche 3 bis 14, **dadurch gekennzeichnet, dass** es eine Kontrolle auf Verletzung von Grenzparametern und Umgebungsbeschreibungen vornimmt.

16. Einstellsystem nach zumindest einem der Ansprüche 15, **dadurch gekennzeichnet, dass** es bei Verletzung von Grenzparametern und Umgebungsbeschreibungen erlaubt, definierbare Aktionen durchzuführen.

17. Einstellsystem nach zumindest einem der vorangehenden Ansprüche, **dadurch gekennzeichnet, dass** das Bewegungsmodell eine dreidimensionale Bewegung umfasst.

18. Einstellsystem nach Anspruch 17, **dadurch gekennzeichnet, dass** das dreidimensionale Bewegungsmodell die Bewegung der Sitzkomponenten und des Sitzes oder von Sitzgruppen in einem dreidimensionalen Koordinatensystem abbildet.

19. Einstellsystem nach Anspruch 18, **dadurch gekennzeichnet, dass** das Koordinatensystem ein Kugelkoordinatensystem ist.

20. Einstellsystem nach Anspruch 18 oder 19, **dadurch gekennzeichnet, dass** sich das Koordinatensystem auf eine Kabine, in der der Sitz oder die Sitze angeordnet ist/sind bezieht.

21. Einstellsystem nach zumindest einem der vorangehenden Ansprüche, **dadurch gekennzeichnet, dass** es die Bewegung des Sitzes und dessen Komponenten innerhalb einer räumlichen Begrenzung, die durch eine räumliche dreidimensionale ebene oder gekrümmte Hüllfläche **gekennzeichnet** ist, beschreibt.

22. Einstellsytem nach Anspruch 21, **dadurch gekennzeichnet, dass** sich die räumliche Begrenzung im Betrieb ändern kann und dass diese Änderung vom Einstellsystem erfasst und berücksichtigt werden kann.

23. Einstellsystem nach Anspruch 22, **dadurch gekennzeichnet, dass** ein Informationsaustausch zwischen den Sitzen bzw. deren Steuerungssystemen zum Abgleich der veränderten räumlichen Begrenzungen (Hüllfläche) stattfindet.

24. Einstellsystem nach zumindest einem der vorangehenden Ansprüchen, **dadurch gekennzeichnet, dass** eine automatisierte verkoppelte Bewegung der Sitze vorgesehen ist (**dadurch** wird eine ökonomische, platzsparende Anordnung der Sitze erreicht).
